# EUROPEAN PATENT SPECIFICATION

(11) **EP 1 453 164 B1**
(45) Date of publication and mention of the grant of the patent: **22.02.2012**
(21) Application number: 02726483.7
(22) Date of filing: 24.05.2002
(51) Int. Cl.: H02B 1/20, H02B 11/04, H01H 33/66

(54) **SWITCH GEAR AND MULTI-LAYER SWITCH GEAR**
SCHALTVORRICHTUNG UND MEHRSCHICHTIGE SCHALTVORRICHTUNG
APPAREILLAGE DE COMMUTATION ET APPAREILLAGE DE COMMUTATION MULTICOUCHE

(30) Priority: 07.12.2001 JP 2001374780; 07.12.2001 JP 2001374781
(43) Date of publication of application: 01.09.2004
(73) Proprietor: Mitsubishi Electric Corporation, Tokyo 100-8310 (JP)
(72) Inventor: OKAZAWA, Hiroshi, c/o Mitsubishi Denki K. K., Tokyo 100-8310 (JP); SANO, Kouji, c/o Mitsubishi Denki K. K., Tokyo 100-8310 (JP); UENUSHI, Masashi, c/o Mitsubishi Denki K. K., Tokyo 100-8310 (JP); NUMATA, Shinichi, c/o Mitsubishi Denki K. K., Tokyo 100-8310 (JP)
(74) Representative: HOFFMANN EITLE
(86) International application number: PCT/JP2002/005038
(87) International publication number: WO 2003/049245

(56) References cited:
- WO-A-95/27298
- JP-A- 3 074 117
- JP-A- 11 098 627
- JP-A- 57 196 426
- JP-A- 2001 210 200
- JP-U- 7 023 918
- JP-U- 55 148 305
- JP-U- 56 108 311
- JP-U- 62 202 002
- JP-Y1- 45 031 709

## Description

### Technical Field

The present invention relates to switchgear and multi-feeder switchgear having a vacuum valve of which axis or axial direction extends in parallel to a floor.

### Background Art

In conventional switchgears, vacuum valve (vacuum switch), bus bar part and load side conductor (conductors for cable connection) constituting a main circuit thereof are located in compartments with a space from one another so that they do not interfere with one another.

Hence a problem exists in that the vacuum valve, bus bar part and load side conductor occupy a large percentage of the whole volume. Likewise, in case of a two or three feeder construction, each comprised of one feeder of three-phase vacuum valve, bus bar part and load side conductor forming a main circuit of the switchgear, a problem exists in that the mentioned elements occupy a large percentage of the whole volume.

The present invention was made to solve the above-discussed problems and has an object of providing switchgear downsized or miniaturized by disposing the vacuum valve, bus bar part and load side conductor forming a main circuit in close proximity to one another so that they occupy a smaller percentage of the whole volume.

The invention has another object of providing multi-feeder switchgear downsized by disposing the three-phase vacuum valve, bus bar part and load side conductor forming a main circuit in close proximity to one another so that they occupy a smaller percentage of the whole volume.

Document JP 03074117 A is known as prior art, wherein a multi-feeder switchgear according to the preamble of claim 6 and 10, and a switchgear according to the preamble of claim 1 is disclosed.

### Disclosure of Invention

Switchgear according to the present invention is comprised of a vacuum valve of which axis extends in parallel to a floor. This switchgear includes: a load side conductor connected to one end of the mentioned vacuum valve; a first connection conductor of which longitudinal direction extends in parallel to axial direction of the mentioned vacuum valve, and of which one end is connected to the other end of the mentioned vacuum valve; and a second connection conductor of which longitudinal direction extends substantially in perpendicular to axial direction of the mentioned vacuum valve, and of which one end is connected to the other end of the mentioned first connection conductor and the other end is connected to a bus bar. As a result, it is possible to downsize the switchgear.

In the mentioned switchgear according to the invention, the mentioned bus bar is preferably disposed so that longitudinal direction thereof is substantially in perpendicular to axial direction of the mentioned vacuum valve and longitudinal direction of the mentioned second connection conductor, and that one end of the bus bar is connected to the other end of the mentioned second connection conductor. As a result, it is possible to downsize the switchgear.

In the mentioned switchgear according to the invention, one end of the mentioned first connection conductor includes a contact that allows the mentioned vacuum valve to be led out, and the other end thereof is bent and connected to the mentioned second connection conductor. As a result, it is easy to inspect the switchgear.

In the mentioned switchgear according to the invention, the mentioned vacuum valve, the mentioned load side conductor, the mentioned first connection conductor, the mentioned second connection conductor, and the mentioned bus bar are respectively three-phased. As a result, it is possible to downsize the switchgear.

In the mentioned switchgear according to the invention, a solid insulating material insulates the mentioned vacuum valve, the mentioned first connection conductor, the mentioned second connection conductor and the mentioned bus bar. As a result, it is possible to further downsize the switchgear.

Multi-feeder switchgear according to the invention is comprised of a row of three-phase vacuum valves, of which axial direction extends in parallel to a floor. In this multi-feeder switchgear, plural feeders each covering three-phases are stacked forming a multi-feeder in vertical direction. Each feeder covering three phases includes: a load side conductor of each phase connected to one end of the mentioned vacuum valve: a first connection conductor of each phase of which longitudinal direction extends in parallel to axial direction of the mentioned vacuum valve and of which one end is connected to the other end of the mentioned vacuum valve; and a second connection conductor of each phase of which longitudinal direction extends substantially in perpendicular to axial direction of the mentioned vacuum valve and of which one end is connected to the other end of the mentioned first connection conductor. Further, the other end of the mentioned second connection conductor of each phase in each feeder is connected to a bus bar of each phase common to the plural feeders stacked in vertical direction. As a result, it is possible to downsize the multi-feeder switchgear, especially reducing the multi-feeder switchgear in height, and it is also possible to reduce the cost.

In the mentioned switchgear according to the invention, the mentioned second connection conductor of each phase also serves as a bus bar conductor for each phase row panel for connecting panels disposed in parallel. As a result, it is possible to downsize the multi-feeder switchgear and reduce the cost.

In the mentioned switchgear according to the invention, a compartment located below the plural feeders stacked in vertical direction is used as a space for processing the load side conductor of each phase. As a result, it is possible to downsize the multi-feeder switchgear as a whole.

In the mentioned switchgear according to the invention, a solid insulating material integrally forming three phases into one unit insulates the mentioned vacuum valve of each phase, the mentioned first connection conductor of each phase, the mentioned second connection conductor of each phase, and the mentioned bus bar of each phase. As a result, it is possible to further downsize the multi-feeder switchgear.

Another multi-feeder switchgear according to the invention is comprised of a row of three-phase vacuum valves, of which axial direction extends substantially in perpendicular to a floor. In this multi-feeder switchgear, plural feeders each covering three-phases are stacked forming a multi-feeder in vertical direction. Each feeder covering three phases includes: a load side conductor of each phase connected to one end of the mentioned vacuum valve; and a first connection conductor of each phase of which longitudinal direction extends in parallel to axial direction of the mentioned vacuum valve and of which one end is connected to the other end of the mentioned vacuum valve. Further, the other end of the first connection conductor of each phase in each feeder is connected to a bus bar of each phase common to the plural feeders stacked in vertical direction. As a result, it is possible to downsize the multi-feeder switchgear, especially reducing the multi-feeder switchgear in width (in a direction perpendicular to the axial direction of the vacuum valve and parallel to the floor), and it is also possible to reduce the cost.

In the mentioned multi-feeder switchgear according to the invention, connectors of respective phases of the foregoing load side conductors in each feeder are bent in vertical direction so that the connectors of respective phases may separate from one another. As a result, it is possible to secure a required insulation distance.

In the mentioned multi-feeder switchgear according to the invention, a bus bar conductor for each phase row panel for connecting panels disposed in parallel is disposed substantially in perpendicularly to the mentioned three-phase bus bar common to the plural feeders stacked in vertical direction. As a result, it is possible to downsize the multi-feeder switchgear.

### Brief Description of Drawings

Fig. 1 is a perspective view showing an essential part of switchgear according to Embodiment 1 of the present invention.
Figs. 2 (a) and (b) are top views of the essential part of the switchgear according to Embodiment 1.
Fig. 3 is a side view of the essential part of the switchgear according to Embodiment 1.
Fig. 4 is a side view of the essential part of the switchgear according to Embodiment 1 taken from the load conductor side.
Fig. 5 is a perspective view showing an essential part of switchgear according to Embodiment 2 of the invention.
Figs. 6(a), (b), (c) and (d) are schematic views showing modifications of the arrangement of vacuum valves.
Fig. 7 is a perspective view showing an essential part of switchgear according to Embodiment 4 of the invention.
Fig. 8 is a perspective view showing one feeder of multi-feeder switchgear according to Embodiment 5 of the invention.
Fig. 9 is a front view of Fig. 8.
Fig. 10 is a perspective view showing multi-feeder switchgear according to Embodiment 5.
Fig. 11 is a perspective view showing one feeder of multi-feeder switchgear according to Embodiment 6 of the invention.
Fig. 12 is a top view of Fig. 11.
Fig. 13 is a perspective view showing multi-feeder switchgear according to Embodiment 6.
Fig. 14 is a perspective view showing multi-feeder switchgear according to Embodiment 7 of the invention.
Fig. 15 is a perspective view showing multi-feeder switchgear according to Embodiment 8 of the invention.

### Best Mode for Carrying Out the Invention

### Embodiment 1.

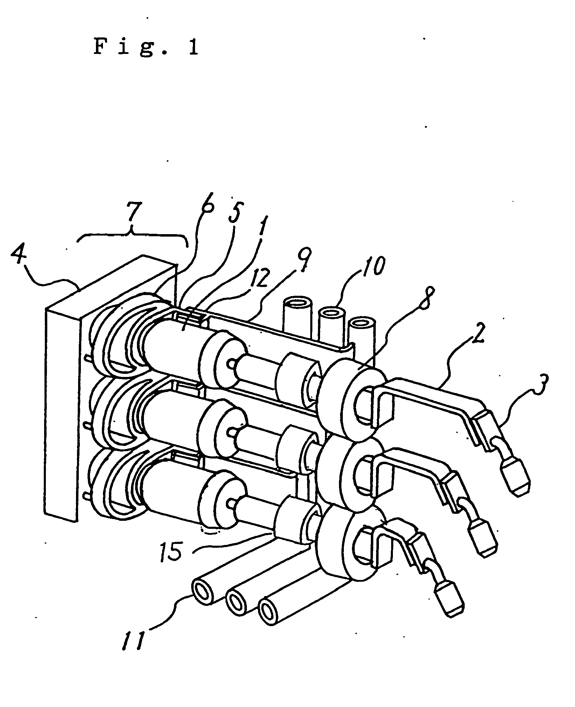

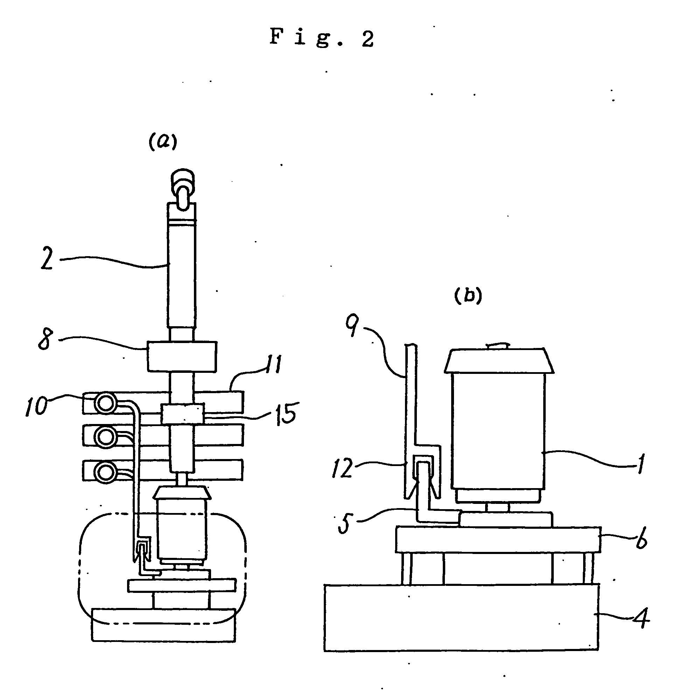

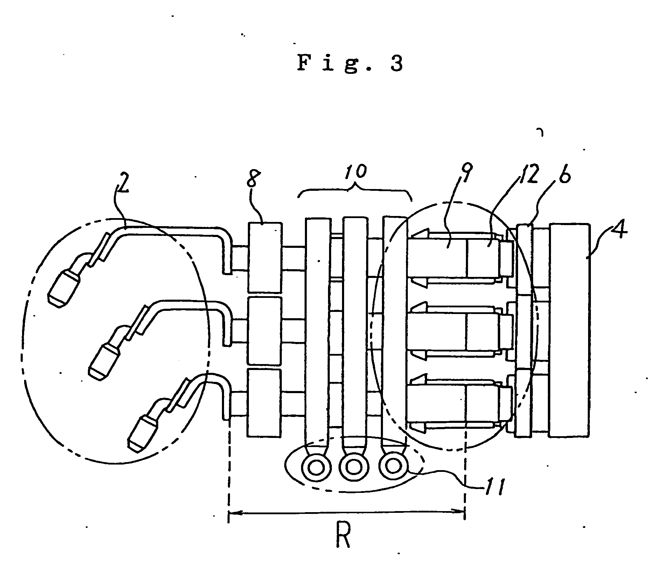

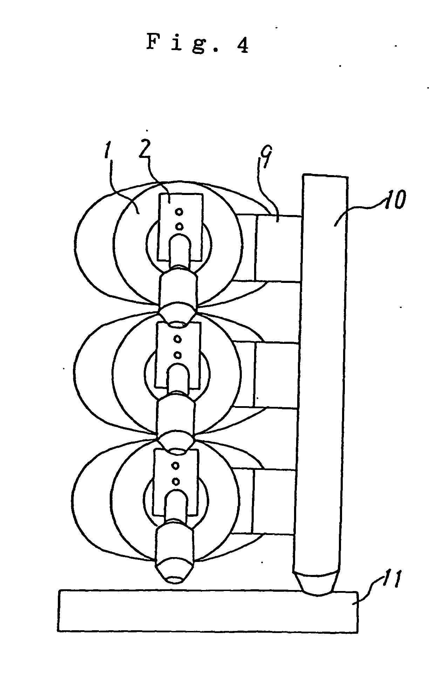

Fig. 1 is a perspective view showing an essential part of switchgear according to Embodiment 1 of the present invention, and Figs. 2(a) and (b) are top views of the essential part of the switchgear according to Embodiment 1. Fig. 3 is a side view of the essential part of the switchgear according to Embodiment 1. Fig. 4 is a side view of the essential part of the switchgear according to Embodiment 1 taken from the load conductor side. In the drawings, reference numeral 1 is a vacuum valve (vacuum switch) of which axis is disposed in parallel to the floor. This vacuum valve 1 is provided with an opening and closing contact comprised of a stationary contact and a moving contact inside. Numeral 2 is a load side conductor (conductor for cable connection) extending and connected to one end of a conductor connected to the vacuum valve 1. This load side conductor 2 is provided with a press-fitting terminal (connector) for cable connection at an end thereof. Numeral 4 is an operation mechanism for on/off operation of the vacuum valves 1, and numeral 5 is a L-shaped conductor connected and fixed to the moving contact side being the other end of the vacuum valve 1. The vacuum valve 1 to which the L-shaped conductor is connected is fixed to and held by the operation mechanism 4 by a hold ring 6. Numeral 7 is a circuit breaker including the vacuum valve 1 and the operation mechanism 4 and being capable of interrupting electric current. Numeral 8 is a current transformer that is arranged surrounding the conductor extending in axial direction of the vacuum valve 1 and used for measuring a load side current. Numeral 15 is a current transformer that is arranged surrounding the conductor extending in axial direction of the vacuum valve 1 and used for measuring instrumental electric current.

Numeral 9 is a first connection conductor of which longitudinal direction extends in parallel to axial direction of the vacuum valve 1. As shown in Fig. 2, one end of the first connection conductor 9 is connected to the other end of the vacuum valve 1 via the L-shaped conductor 5. The mentioned one end of the first connection conductor 9 is formed into an elastic contact 12 of -shape in section, in which the mentioned L-shaped conductor 5 is inserted against the elasticity, thus the contact 12 is connected to the L-shaped conductor 5. Fig. 2 (b) is an enlarged view of a portion enclosed with a two-dot chain line in Fig. (a). Numeral 10 is a second connection conductor of which longitudinal direction extends substantially in perpendicular to axial direction of the vacuum valves 1. By bending the other end of the first connection conductor 9, one end of the second connection conductor 10 is connected to the other end of the first connection conductor 9. Numeral 11 is a bus bar (power supply side conductor) of which longitudinal direction extends substantially in perpendicular to axial direction of the vacuum valve 1 and longitudinal direction of the second connection conductor 10. One end of the bus bar 11 is connected to the other end (end part) of the second connection conductor 10.

The switchgear according to this Embodiment 1 is of a three-phase type, in which the load side conductor 2, the vacuum valve 1, the first connection conductor 9, the second connection conductor 10 and the bus bar 11 form one set of feeder conforming to one phase, and three sets conforming to three phases are disposed in parallel forming a row of three phases. The three-phase row of the axis of the vacuum valve 1 is perpendicular to the floor, and the vacuum valve 1 is vertically disposed. Therefore, it is possible to reduce the switchgear in width (in the direction perpendicular to axis of the vacuum valve and parallel to the floor). In the first connection conductor 9, one end and the other end of each phase are the same in structure, but respective phases are formed different in length in longitudinal direction as shown in Fig. 2 (a). The load side conductor 2, the vacuum valve 1, the first connection conductor 9, the second connection conductor 10, and the bus bar 11 are disposed in close proximity to one another with a insulation distance therebetween. It is possible to lead out the operation mechanism 4 holding the vacuum valve 1 from the first connection conductor 9, the second connection conductor 10 and the bus bar 11 for the purpose of inspection. At this time, an end of the L-shaped conductor 5 is also led out from the contact 12 located at the first connection conductor 9.

Fig. 3 is a side view taken in parallel to axial direction of the vacuum valve 1 and in perpendicular to the floor. The three-phase row of the second connection conductor is disposed in parallel to axial direction of the vacuum valve 1. Under the state of keeping the insulation distance, the three-phase row of the second connection conductor can be disposed within a range R from base portion of the contact 12 of the first connection conductor 9 to base portion of the load side conductor 2. Utilizing this free choice in disposition of the three-phase row makes it possible to position flexibly the bus bar in the main circuit. Specifically, as indicated by the two-dot chain lines in Fig. 3, the vacuum valves 1, the load side conductors 2 and the bus bars 11 covering the three phases are disposed on the vertexes of a triangle (desirably equilateral triangle or isosceles triangle establishing the bus bar 11 as the apex) in close proximity to one another. This makes it possible to downsize the switchgear as a result of the mentioned arrangement of the main circuit. In Fig. 3, the first connection conductor 9 is in parallel not only to axial direction of the vacuum valve 1 but also to the floor. It is also preferable that the first connection conductor 9 is inclined to the floor while being kept parallel to the axial direction of the vacuum valve 1.

Fig. 4 is a side view taken from the side of load side conductor 2, and in which each phase of the vacuum valve 1 and the load side conductor 2 is in parallel to the second connection conductor 10. The end portion of the second connection conductor 10 is screwed in the bus bar 11, and the second connection conductor 10 and the bus bar 11 are disposed in perpendicular to each other. It is understood from this drawing that the main circuit (high-voltage charging section) occupies a larger volume in the space, and that the main circuit is arranged with its elements close to one another. The mentioned high-voltage charging part includes the load side conductor 2, the vacuum valve 1, the first connection conductor 9, the second connection conductor 10 and the bus bar 11.

### Embodiment 2.

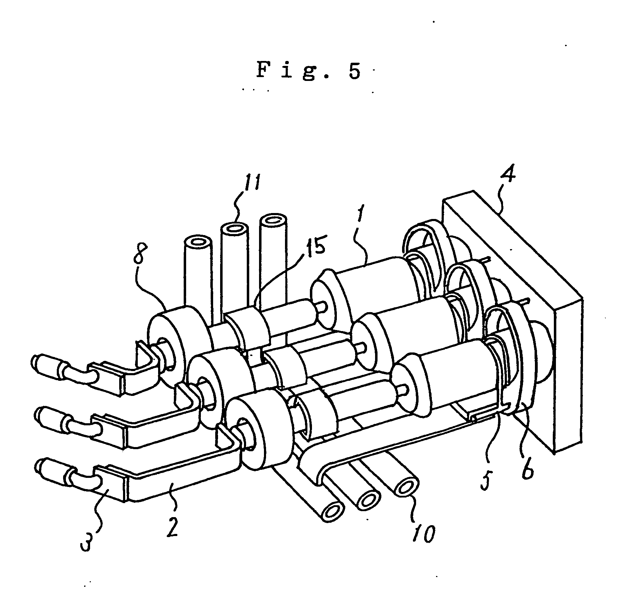

Fig. 5 is a perspective view showing an essential part of switchgear according to Embodiment 2 of the invention, and a three-phase row of the axes of the vacuum valves is disposed in parallel to the floor. The same reference numerals are designated to the parts identical or equivalent to those in the foregoing Embodiment 1, and further description thereof is omitted herein. This switchgear structure makes it possible to largely reduce the switchgear in height.

### Embodiment 3.

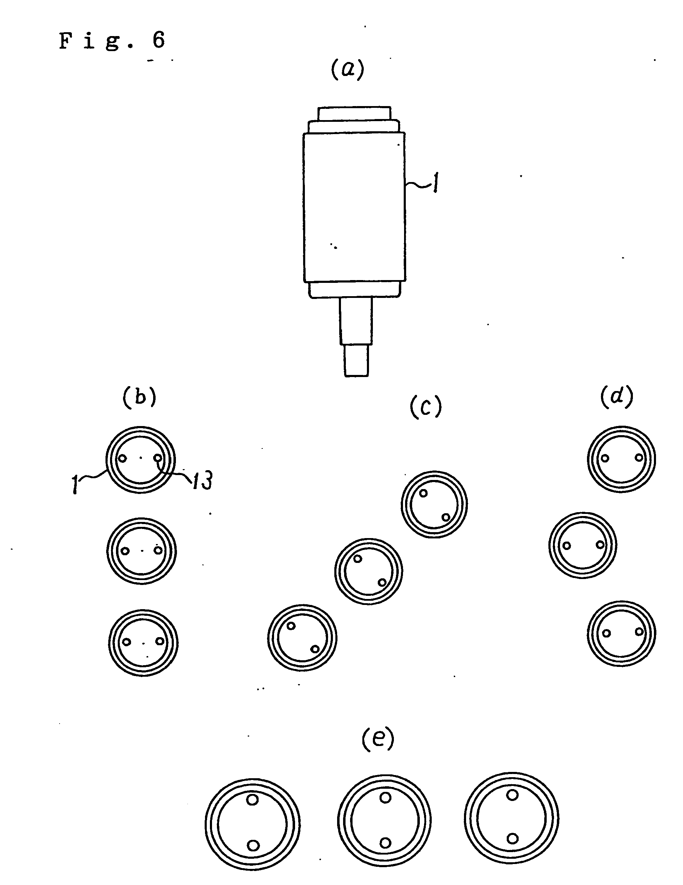

Figs. 6(a), (b), (c) and (d) are schematic view showing modifications of the arrangement of vacuum valves. Fig. 6(a) shows a single vacuum valve. Figs. 6(b) to (e) are cross-sectional side views showing vacuum valves. Fig. 6 (b) shows an arrangement in which a three-phase row of the axes of the vacuum valves is disposed in perpendicular to the floor (disposed one above another), which is the case of the foregoing Embodiment 1. Fig. 6(c) shows an arrangement in which a three-phase row of the axes of the vacuum valves is disposed obliquely to the floor. Fig. 6(d) shows an arrangement in which a three-phase row of the axes of the vacuum valves is disposed zigzag. Fig. 6(e) shows an arrangement in which a three-phase row of the axes of the vacuum valves is disposed in parallel to the floor, which is the case of the foregoing Embodiment 2. In addition, numeral 13 indicates a setscrew of the vacuum valve 1.

### Embodiment 4.

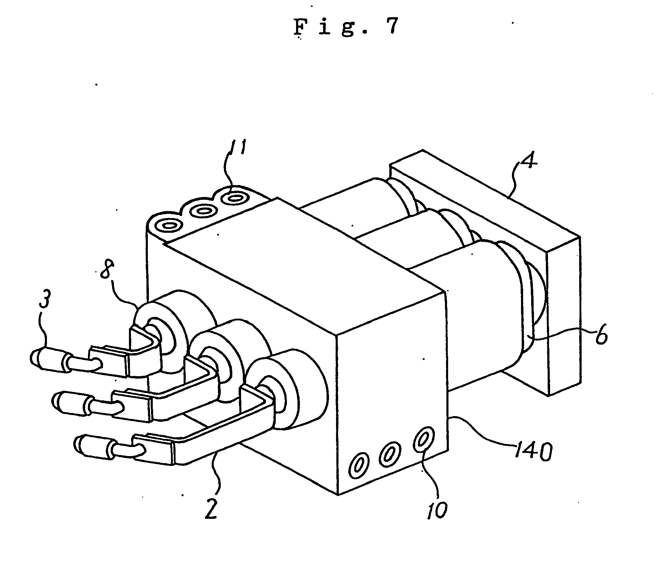

Fig. 7 is a perspective view showing an essential part of switchgear according to Embodiment 4 of the invention, and in which the switchgear is molded of a solid insulating material so that they are disposed in further close proximity to one another. The same reference numerals are designated to the portions identical or equivalent to those in the foregoing Embodiment 1, and further description of them is omitted herein. The vacuum valves, the first connection conductors, the second connection conductors 10, and the bus bars 11 are insulated by an epoxy solid insulator 140 and are integrally injection-molded. In order to further downsize the switchgear, the charging part of the switchgear is integrally injection-molded with the epoxy solid insulator of which dielectric breakdown electric field is 20 kV/mm, which is approximately 6. 67 times as large as that of air (air: 3 kV/mm).

### Embodiment 5.

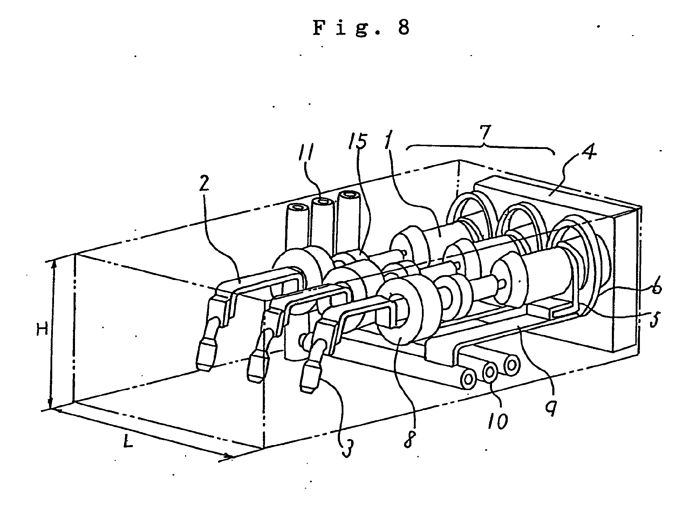

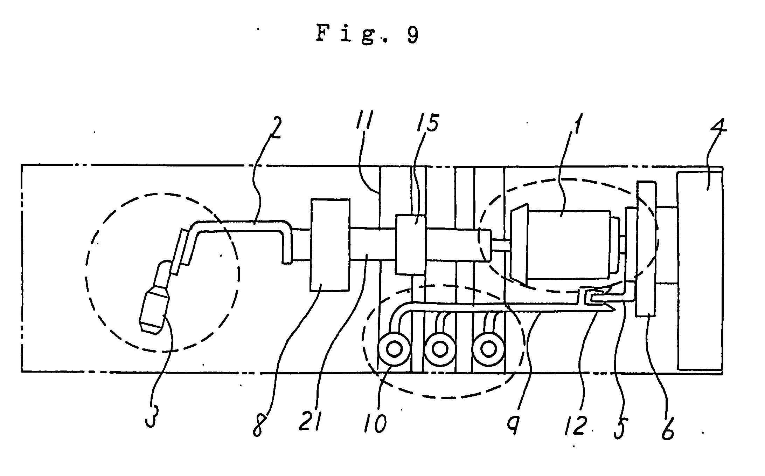

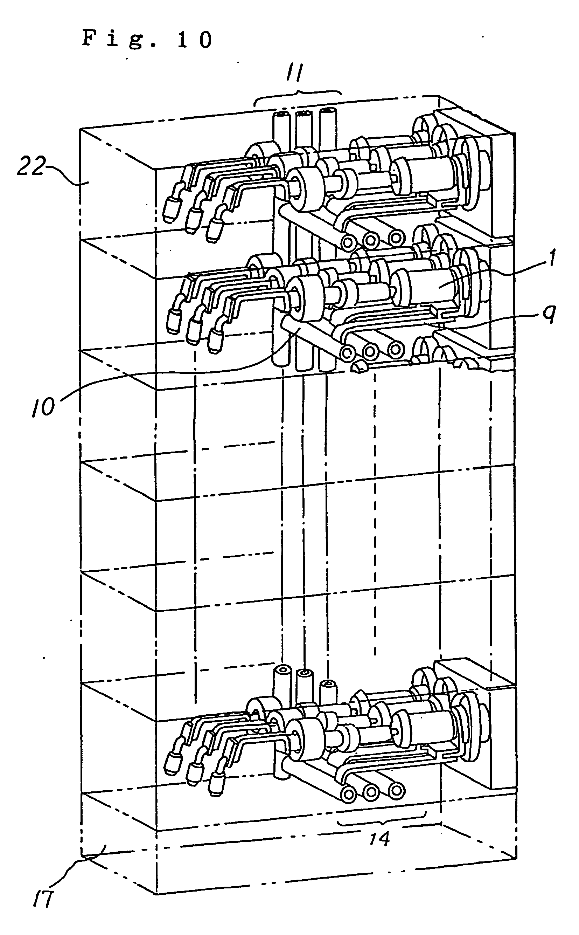

Fig. 8 is a perspective view showing one feeder of multi-feeder switchgear according to Embodiment 5 of the invention, and Fig. 9 is a front view of Fig. 8. Fig. 10 is a perspective view showing the multi-feeder switchgear according to Embodiment 5. In the drawings, numeral 1 is a vacuum valve (vacuum switch) of which axial direction extends in parallel to the floor. This vacuum valve 1 is provided with an opening and closing contact comprised of a stationary contact and a moving contact inside. A three-phase row of the vacuum valves 1 is disposed in parallel to the floor. Numeral 2 is a load side conductor (conductor for cable connection) extending and connected to one end of a conductor 21 connected to the vacuum valve 1. This load side conductor 2 is provided with a press-fitting terminal (connector) for cable connection at an end thereof. Numeral 4 is an operation mechanism for on/off operation of the vacuum valves 1, and numeral 5 is a L-shaped conductor connected and fixed to the moving contact side being the other end of the vacuum valve 1. The vacuum valve 1 to which the L-shaped conductor is connected is fixed to and held by the operation mechanism 4 by a hold ring 6. Numeral 7 is a circuit breaker including the vacuum valve 1 and the operation mechanism 4 and being capable of interrupting electric current. Numeral 8 is a current transformer that is arranged surrounding the conductor extending in axial direction of the vacuum valve 1 and used for measuring a load side current. Numeral 15 is a current transformer that is arranged surrounding the conductor extending in axial direction of the vacuum valve 1 and used for measuring instrumental electric current.

Numeral 9 is a first connection conductor of which longitudinal direction extends in parallel to axial direction of the vacuum valve 1. As shown in Fig. 9, one end of the first connection conductor 9 is connected to the other end of the vacuum valve 1 via the L-Shaped conductor 5. The mentioned one end of the first connection conductor 9 is formed into an elastic contact 12 of -shape in section, in which the mentioned L-shaped conductor 5 is inserted against the elasticity, thus the contact 12 is connected to the L-shaped conductor 5. Numeral 10 is a second connection conductor of which longitudinal direction extends substantially in perpendicular to axial direction of the vacuum valves 1. By bending the other end of the first connection conductor 9, one end of the second connection conductor 10 is connected to the other end of the first connection conductor 9. Numeral 11 is a bus bar (power supply side conductor) of which longitudinal direction extends substantially in perpendicular to axial direction of the vacuum valve 1 and longitudinal direction of the second connection conductor 10. One end of the bus bar 11 is connected to the other end (end part) of the second connection conductor 10.

The switchgear according to this Embodiment 5 is of a three-phase type, in which the load side conductor 2, the vacuum valve 1, the first connection conductor 9, the second connection conductor 10 and the bus bar 11 form one set of feeder conforming to one phase, and three sets conforming to three phases are disposed in parallel forming a row of three phases. In the first connection conductor 9, one end and the other end of each phase are the same in structure, but respective phases are formed different in length in longitudinal direction as shown in Fig. 9. The load side conductor 2, the vacuum valve 1, the first connection conductor 9, the second connection conductor 10, and the bus bar 11 are disposed in close proximity to one another with a insulation distance therebetween. It is possible to lead out the operation mechanism 4 holding the vacuum valve 1 from the first connection conductor 9, the second connection conductor 10 and the bus bar 11 for the purpose of inspection. At this time, an end of the L-shaped conductor 5 is also led out from the contact 12 located at the first connection conductor 9.

As indicated by a broken-line circle and ovals in Fig. 9, the vacuum valves 1, the load side conductors 2 provided with the press-fitting connector 3 and the second connection conductors 10 are disposed on the vertexes of a triangle (desirably equilateral triangle or isosceles triangle establishing the bus bar 11 as the apex) in close proximity to one another. This makes it possible to downsize the switchgear as a result of the mentioned arrangement of the main circuits. In particular, disposing the vacuum valves 1 and the second connection close to each another downsizes the switchgear. In Fig. 8, the first connection conductor 9 is in parallel to axial direction of the vacuum valve 1 and substantially in perpendicular to the second connection conductor 10. It is also preferable that the first connection conductor 9 is disposed obliquely to the second connection conductor 10 while being kept parallel to the axial direction of the vacuum valve 1.

A rectangular parallelepiped indicated by the two-dot chain line in Fig. 8 is a compartment for accommodating a feeder covering three phases, which is provided with the load side conductors 2, the press-fitting connectors 3, the vacuum valves 1, the first connection conductors 9, and the second connection conductors 10. In the drawing, H indicates height of the compartment and L indicates width thereof.

As described above, a three-phase row of the vacuum valves 1 of which axial direction extends in parallel to the floor is disposed in parallel to the floor, the load side conductor 2 of each phase is connected to one end of the vacuum valve 1, one end of the first connection conductor 9 of each phase of which longitudinal direction extends in parallel to the axial direction of the vacuum valve 1 is connected to the other end of the vacuum valve 1, and one end of the second connection conductor 10 of each phase of which longitudinal direction extends substantially in perpendicular to the axial direction of the vacuum valve 1 is connected to the other end of the first connection conductor 9. As a result, it is possible to downside the switchgear, particularly reducing the switchgear in height. In this case, a ratio of the height to the width of one feeder of the switchgear could be approximately H:L=3:5.

Fig. 10 is a perspective view showing multi-feeder switchgear according to this Embodiment 5 and shows a multi-feeder arrangement in which six feeders are stacked in vertical direction, and each of the six feeders is the same as the three-phase feeder shown in Fig. 8. Numeral 11 is a bus bar of each phase common to the plural feeders stacked in vertical direction, and the bus bar 11 passes through a compartment 22 region of each three-phase feeder. As described with reference to Figs. 8 and 9, the second connection conductor 10 of each phase in each feeder is connected substantially in perpendicular to the bus bar 11 of each phase common to the plural feeders.

When feeder panels including the plural feeders stacked in vertical direction are arranged in parallel, it is necessary to use a bus bar conductor for each phase row panel for connecting the panels, and it is possible to use the second connection conductor 10 of each phase in any of the feeders also as the bus bar conductor for each phase row panel. For example, it is preferable to use a second connection conductor 14 of each phase located at the bottom feeder as the bus bar conductor for each phase row panel.

In this Embodiment 5, one feeder is about 350 mm in height H and 550 mm in width L when a bus bar voltage is 12 kV (these values are available provided that the charging part described later is insulated by a solid insulating material). Therefore, in a case where the panel is 2300 mm in height, number of feeders N ≦ 6. A bottom compartment 17 (compartment located at the bottom part of the plural feeders stacked in vertical direction), which is smaller than the other compartments in height, can be utilized as a space for processing the load side conductor (cable) of each phase, and it is possible to lead in the load side conductor to utilize the bottom compartment as a working space.

### Embodiment 6.

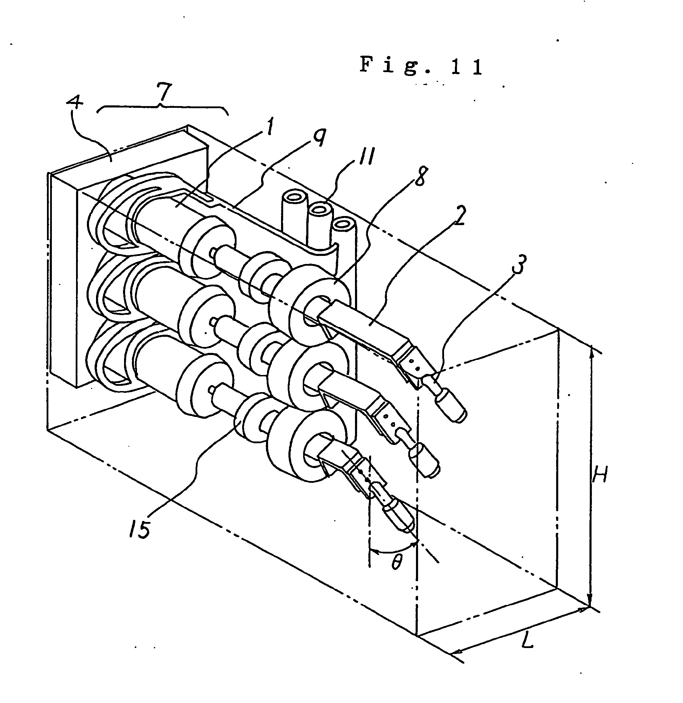

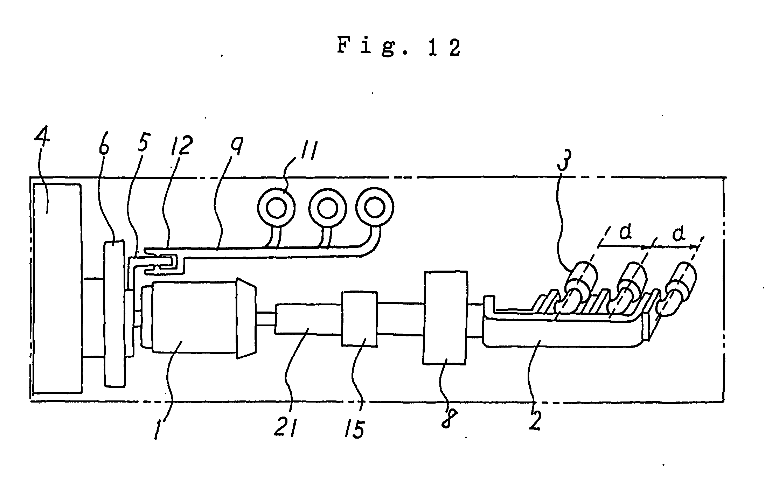

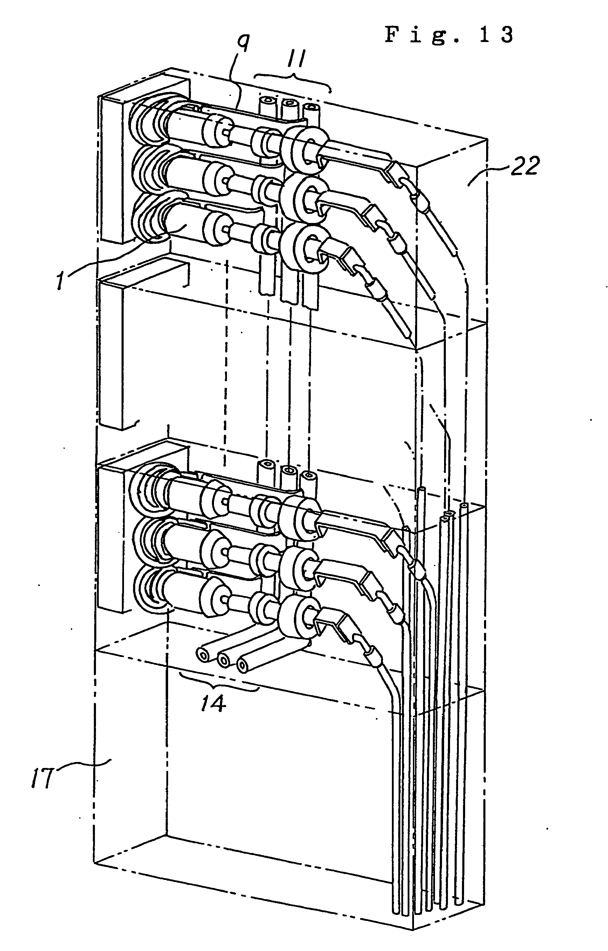

Fig. 11 is a perspective view showing a feeder of multi-feeder switchgear according to Embodiment 6 of the invention, and Fig. 12 is a top view of Fig. 11. Fig. 13 is a perspective view showing the multi-feeder switchgear according to Embodiment 6. The same numerals are designated to the portions identical or equivalent to those in the foregoing Embodiment 5, and further description of them is omitted herein. In this Embodiment 6, the axial direction of the vacuum valves 1 extends in parallel to the floor, and the three-phase row of the vacuum valves 1 is disposed substantially in perpendicular to the floor. The first connection conductor 9 connected to the vacuum valve 1 is in parallel to the axial direction of the vacuum valve 1 and is connected to the bus bar 11 disposed substantially perpendicular to the axial direction of the vacuum valve 1. As a result, in the multi-feeder switchgear of Figs. 11 and 12, it is possible to downsize the switchgear, especially reducing the switchgear in the direction of width L (direction perpendicular to axial direction of the vacuum valve and parallel to the floor).

Arranging the vacuum valves 1 in vertical direction, i.e., one above another, causes the press-fitting connectors 3 located at the ends of the load side conductors 2 connected to the conductors 21 of the vacuum valves 1 to come near and interfere with one another among the connectors 3 of the three phases. Therefore, to separate the connectors 3 of respective phases from one another, they are inclined at a desired angle θ to the vertical direction as shown in Fig. 11. When required, it is possible to avoid the mutual interference by disposing the load side conductors 2 of respective phases to be different in length (in axial direction of the vacuum valves 1) from one another so that the connectors 3 of the respective phases are spaced kept with an appropriate insulation distance d as shown in Fig. 12.

Fig. 13 is a perspective view showing the multi-feeder switchgear according to Embodiment 6, and in which three multi-feeders, each covering three phases as shown in Fig. 11, are stacked in vertical direction. Numeral 11 is a bus bar of each phase common to the plural feeders stacked in vertical direction, and the bus bar 11 passes through a region of respective compartments 22 of respective three-phase feeders. As described with reference to Figs. 11 and 12, the first connection conductor 9 of each phase in each feeder is connected substantially in perpendicular to the bus bar 11 of each phase common to the plural feeders.

When panels (feeder panel) comprised of the plural feeders stacked in vertical direction are disposed in parallel, it is necessary to use a bus bar conductor of each phase row panel for connecting the panels, and it is preferable that the bus bar conductor 14 of each phase row panel for connecting the panels disposed in parallel is connected substantially in perpendicular to the three-phase bus bar common to the plural feeders stacked in vertical direction in the compartment 22 region of any feeder. It is not necessary to connect the bus bar conductor 14 for each phase row panel when the panels (feeder panels) are not disposed in parallel.

In this Embodiment 6, one feeder is about 350 mm in height H and 550 mm in width L when a bus bar voltage is 12 kV (these values are available provided that the charging part described later is insulated by a solid insulating material). Therefore, in a case where the panel is 2300 mm in height, number of feeders N ≦ 6. A bottom compartment 17 (compartment located at the bottom part of the plural feeders stacked in vertical direction), which is smaller than the other compartments in height, can be utilized as a space for processing the load side conductor (cable) of each phase, and it is possible to lead in the load side conductor to utilize the bottom compartment as a working space.

### Embodiment 7.

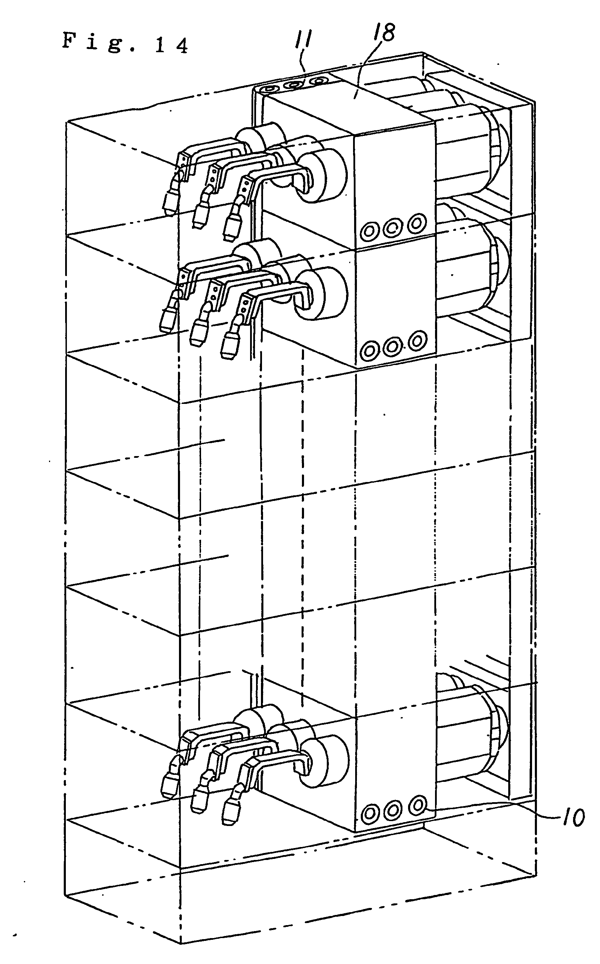

Fig. 14 is a perspective view showing multi-feeder switchgear according to Embodiment 7 of the invention, and in which main circuit is molded of a solid insulating material so that they are disposed in further close proximity to one another. The same reference numerals are designated to the portions identical or equivalent to those in the foregoing Embodiment 5, and further description of them is omitted herein. In the multi-feeder switchgear shown in Fig. 10, the vacuum valves, the first connection conductors, the second connection conductors 10, and the bus bars 11 are insulated by an epoxy solid insulator 18 and are integrally injection-molded. In order to further downsize the switchgear, the charging part of the switchgear is integrally injection-molded with the epoxy solid insulator of which dielectric breakdown electric field is 20 kV/mm, which is approximately 6. 67 times as large as that of air (air: 3 kV/mm). This makes it possible to provide downsized multi-feeder switchgear. Although the three phases are integrally molded in Fig. 14, it is also preferable that the three phases are separately molded of a solid insulating material.

### Embodiment 8.

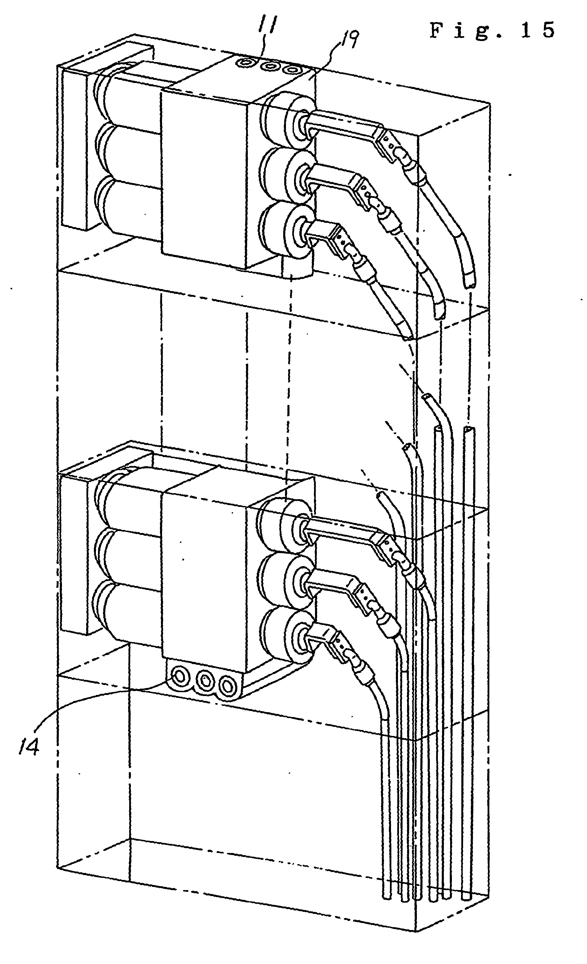

Fig. 15 is a perspective view showing multi-feeder switchgear according to Embodiment 8 of the invention, and in which main circuit is integrally molded of a solid insulating material so that they are arranged in further close proximity to one another. The same numerals are designated to the portions identical or equivalent to those in the foregoing Embodiment 5, and further description of them is omitted herein. In the multi-feeder switchgear shown in Fig. 13, the vacuum valve 1, the first connection conductor 9, the bus bar 11, and the panel-lining bus bar conductor 14 are insulated by an epoxy solid insulator 19 and are integrally injection-molded. Although the three phases are integrally molded in Fig. 15, it is also preferable that the three phases are separately molded of a solid insulating material.

### Industrial Applicability

The present invention is preferably used in switchgear and multi-feeder switchgear having a vacuum valve.

## Claims

1. Switchgear including a vacuum valve (1) of which axis extends horizontally, comprising:
a load side conductor (2) connected to one end of said vacuum valve (1);
a first connection conductor (9) of which longitudinal direction extends in parallel to the axial direction of said vacuum valve (1), and of which one end is connected to the other end of said vacuum valve (1); and
a second connection conductor (10) of which longitudinal direction extends substantially in perpendicular to the axial direction of said vacuum valve (1), and of which one end is connected to the other end of said first connection conductor (9) and the other end is connected to a bus bar (11),
**characterized in that**
an operation mechanism (4) for on/off operation of the vacuum valve (1) is disposed in the other end side of said vacuum valve (1),
said load side conductor (2) is disposed in the one end side of said vacuum valve (1), and
said bus bar (11) is disposed so that the longitudinal direction thereof is substantially in perpendicular to the axial direction of said vacuum valve (1) and the longitudinal direction of said second connection conductor (10), and that one end of the bus bar (11) is connected to the other end of said second connection conductor (10).

2. The switchgear according to claim 1, wherein one end of said first connection conductor (9) includes a contact (12) that allows said vacuum valve (1) to be led out, and the other end thereof is bent and connected to said second connection conductor (10).

3. The switchgear according to claim 1, wherein said vacuum valve (1), said load side conductor (2), said first connection conductor (9), said second connection conductor (10), and said bus bar (11) are respectively three-phased.

4. The switchgear according to claim 1 or 3, wherein a solid insulating material (140) insulates said vacuum valve (1), said first connection conductor (9), said second connection conductor (10) and said bus bar (11).

5. Multi-feeder switchgear including a row of three-phase vacuum valves (1), of which axial direction extends horizontally;
wherein plural feeders each covering three phases are stacked forming a multi-feeder in vertical direction;
each feeder covering three phases, wherein the multi-feeder switchgear comprises a switchgear according to claim 1.

6. The switchgear according to claim 5, wherein said second connection conductor (10) of each phase also serves as a bus bar conductor for each phase row panel for connecting panels disposed in parallel.

7. The switchgear according to claim 5, wherein a compartment (17) located below the plural feeders stacked in vertical direction is used as a space for processing the load side conductor of each phase.

8. The switchgear according to claim 5, wherein a solid insulating material (18) integrally forming three phases into one unit insulates said vacuum valve (1) of each phase, said first connection conductor (9) of each phase, said second connection conductor (10) of each phase, and said bus bar (11) of each phase.

## Patentansprüche

1. Schaltanlage mit einer Vakuumröhre (1), deren Achse sich horizontal erstreckt, mit:
einem Lastseitenleiter (2), der mit einem Ende der Vakuumröhre (1) verbunden ist;
einem ersten Verbindungsleiter (9), dessen Längsrichtung sich parallel zu der Axialrichtung der Vakuumröhre (1) erstreckt, und bei dem ein Ende mit dem anderen Ende der Vakuumröhre (1) verbunden ist; und
einem zweiten Verbindungsleiter (10), dessen Längsrichtung sich im Wesentlichen senkrecht zu der Axialrichtung der Vakuumröhre (1) erstreckt, und bei dem ein Ende mit dem anderen Ende des ersten Verbindungsleiters (9) verbunden ist und bei dem das andere Ende mit einer Sammelschiene (11) verbunden ist,
**dadurch gekennzeichnet, dass**
ein Betätigungsmechanismus (4) zur AN-/AUS-Betätigung der Vakuumröhre (1) auf der anderen Endseite der Vakuumröhre (1) vorgesehen ist,
der Lastseitenleiter (2) auf der einen Endseite der Vakuumröhre (1) vorgesehen ist, und
die Sammelschiene (11) so vorgesehen ist, dass deren Längsrichtung im Wesentlichen senkrecht zu der Axialrichtung der Vakuumröhre (1) und der Längsrichtung des zweiten Verbindungsleiters (10) ist und dass ein Ende der Sammelschiene (11) mit dem anderen Ende des zweiten Verbindungsleiters (10) verbunden ist.

2. Schaltanlage nach Anspruch 1, bei dem ein Ende des ersten Verbindungsleiters (9) einen Kontakt (12) aufweist, der es ermöglicht, dass die Vakuumröhre (1) hinausgeleitet wird, und bei dem das andere Ende gebogen und mit dem zweiten Verbindungsleiter (10) verbunden ist.

3. Schaltanlage nach Anspruch 1, bei dem die Vakuumröhre (1), der Lastseitenleiter (2), der erste Verbindungsleiter (9), der zweite verbimüumgsleizer (10) und die sammelschiene (11) jeweils dreiphasig sind.

4. Schaltanlage nach Anspruch 1 oder 3, bei dem ein festes Isoliermaterial (140) die Vakuumröhre (1), den ersten Verbindungsleiter (9), den zweiten Verbindungsleiter (10) und die Sammelschiene (11) isoliert.

5. Schaltanlage mit Mehrfachzuführung mit einer Reihe an Dreiphasenvakuumröhren (1), deren Axialrichtung sich horizontal erstreckt;
wobei mehrere Zuführer, die jeweils drei Phasen abdecken, so aufeinander geschichtet sind, dass sie einen Mehrfachzuführer in einer Vertikalrichtung ausbilden;
wobei jeder Zuführer drei Phasen abdeckt, wobei die Schaltanlage mit Mehrfachzuführung eine Schaltanlage nach Anspruch 1 aufweist.

6. Schaltanlage nach Anspruch 5, bei dem der zweite Verbindungsleiter (10) jeder Phase auch als ein Sammelschienenleiter für jede Phasenreihenplatte zum Verbinden der Platten dient, die parallel zueinander vorgesehen sind.

7. Schaltanlage nach Anspruch 5, bei dem eine Abteilung (17), die unterhalb der mehreren Zuführer angeordnet ist, die in einer vertikalen Richtung gestapelt sind, als ein Raum zum Verarbeiten der Lastseitenleiter von jeder Phase verwendet wird.

8. Schaltanlage nach Anspruch 5, bei dem ein festes Isoliermaterial (18), das die drei Phasen einstückig in einer Einheit ausbildet, die Vakuumröhre (1) jeder Phase, den ersten Verbindungsleiter (9) jeder Phase, den zweiten Verbindungsleiter (10) jeder Phase und die Sammelschiene (11) jeder Phase isoliert.

## Revendications

1. Appareillage de commutation incluant un tube à vide (1) dont un axe s'étend horizontalement, comprenant :
un conducteur côté charge (2) relié à une extrémité dudit tube à vide (1) ;
un premier conducteur de connexion (9) dont la direction longitudinale s'étend parallèlement à la direction axiale dudit tube à vide (1), et dont une extrémité est reliée à l'autre extrémité dudit tube à vide (1) ; et
un second conducteur de connexion (10) dont la direction longitudinale s'étend sensiblement perpendiculairement à la direction axiale dudit tube à vide (1), et dont une extrémité est reliée à l'autre extrémité dudit premier conducteur de connexion (9) et l'autre extrémité est reliée à une barre de bus (11),
**caractérisé en ce que**
un mécanisme de mise en oeuvre (4) pour un fonctionnement marche / arrêt du tube à vide (1) est disposé côté autre extrémité dudit tube à vide (1),
ledit conducteur côté charge (2) est disposé côté extrémité dudit tube à vide (1), et
ladite barre de bus (11) est disposée de sorte que la direction longitudinale de celle-ci est sensiblement perpendiculaire à la direction axiale dudit tube à vide (1) et à la direction longitudinale dudit second conducteur de connexion (10), et **en ce qu'**une extrémité de la barre de bus (11) est reliée à l'autre extrémité dudit second conducteur de connexion (10).

2. Appareillage de commutation selon la revendication 1, dans lequel une extrémité dudit premier conducteur de connexion (9) inclut un contact (12) qui permet d'obtenir une sortie dudit tube à vide (1), et l'autre extrémité de celui-ci est pliée et reliée audit second conducteur de connexion (10).

3. Appareillage de commutation selon la revendication 1, dans lequel ledit tube à vide (1), ledit conducteur côté charge (2), ledit premier conducteur de connexion (9), ledit second conducteur de connexion (10), et ladite barre de bus (11) sont respectivement à trois phases.

4. Appareillage de commutation selon la revendication 1 ou 3, dans lequel une matière isolante solide (140) isole ledit tube à vide (1), ledit premier conducteur de connexion (9), ledit second conducteur de connexion (10) et ladite barre de bus (11).

5. Appareillage de commutation à multiples lignes d'alimentation incluant une rangée de tubes à vide à trois phases (1), dont la direction axiale s'étend horizontalement ;
dans lequel plusieurs lignes d'alimentation couvrant chacune trois phases sont empilées formant une ligne d'alimentation multiple dans la direction verticale ;
chaque ligne d'alimentation couvrant trois phases, dans lequel l'appareillage de commutation à multiples lignes d'alimentation comprend un appareillage de commutation selon la revendication 1.

6. Appareillage de commutation selon la revendication 5, dans lequel ledit second conducteur de connexion (10) de chaque phase sert également de conducteur de barre de bus pour chaque panneau de rangée de phase pour relier des panneaux disposés en parallèle.

7. Appareillage de commutation selon la revendication 5, dans lequel un compartiment (17) situé au-dessous des plusieurs lignes d'alimentation empilées dans la direction verticale est utilisé comme espace pour traiter le conducteur côté charge de chaque phase.

8. Appareillage de commutation selon la revendication 5, dans lequel une matière isolante solide (18) formant d'un seul tenant trois phases en une unité isole ledit tube à vide (1) de chaque phase, ledit premier conducteur de connexion (9) de chaque phase, ledit second conducteur de connexion (10) de chaque phase, et ladite barre de bus (11) de chaque phase.
